# EUROPÄISCHE PATENTSCHRIFT

(11) **EP 2 352 660 B1**
(45) Veröffentlichungstag und Bekanntmachung des Hinweises auf die Patenterteilung: **17.07.2013**
(21) Anmeldenummer: 09752738.6
(22) Anmeldetag: 03.11.2009
(51) Int. Cl.: B60N 2/225, B60N 2/12

(54) **FAHRZEUGSITZ MIT KLINKENANORDNUNG**
CAR SEAT WITH A CLIP ARRANGEMENT
SIÈGE DE VÉHICULE AVEC UN ARRANGEMENT PAR CLIQUET

(30) Priorität: 01.12.2008 DE 102008061037
(43) Veröffentlichungstag der Anmeldung: 10.08.2011
(73) Patentinhaber: KEIPER GmbH & Co. KG, 67657 Kaiserslautern (DE)
(72) Erfinder: MAYER, Thomas, 42853 Remscheid (DE)
(74) Vertreter: Liedtke, Markus
(86) Internationale Anmeldenummer: PCT/EP2009/007849
(87) Internationale Veröffentlichungsnummer: WO 2010/063351

(56) Entgegenhaltungen:
- WO-A1-2008/020647
- WO-A1-2008/110261
- WO-A2-2009/103641
- DE-A1- 10 206 304
- DE-A1-102007 011 998

## Beschreibung

Die Erfindung betrifft einen Fahrzeugsitz mit den Merkmalen des Oberbegriffs des Anspruches 1.

Bei Fahrzeugsitzen ist die Verwendung von Bowdenzügen bekannt, um Kräfte von einem Bedienelement an eine andere Stelle, bspw. zu der Lehnenentriegelung, zu übertragen, so dass beispielsweise zum Entriegeln der Lehne an einem Griff im oberen Bereich der Lehne gezogen werden muss, die Kraft über einen Bowdenzug in den Bereich der Lehnenschwenkachse übertragen wird, wo eine Sperrklinke aus ihrer Verriegelungsstellung gehoben wird, so dass die Lehne entriegelt wird und nach vom geschwenkt werden kann.

Ferner ist aus der DE 197 15 764 C2 ein Fahrzeugsitz eines Kraftfahrzeuges bekannt, der eine "Easy-Entry-Stellung" einnehmen kann, bei welcher der Fahrzeugsitz in einer vorderen Position angeordnet ist und die freischwenkbare Lehne nach vom geschwenkt ist. An den Beschlägen des Fahrzeugsitzes, welche der Anbringung der Lehne am Sitzteil des Fahrzeugsitzes dienen, ist eine Koppelvorrichtung vorgesehen, mittels derer die Lehnenentriegelung und die Schienenentriegelung gekoppelt werden. Die Koppelvorrichtung umfasst einen schwenkbar am Freischwenk-Beschlagteil gelagerten Hebel, der einerseits mittels einer Zuglasche am Entriegelungsbolzen der Lehnenentriegelung eingehängt ist und andererseits auf einem eine Hakennase aufweisenden Betätigungsring aufsitzen und sich an der Hakennase einhaken kann. Der drehbar gelagerte Betätigungsring wiederum ist direkt mit der Schienenentriegelung gekoppelt.

In der WO 2008/020647 A1 ist ein Fahrzeugsitz der eingangs genannten Art beschrieben, dessen Klinkenanordnung einen zweiteiligen Hebel aufweist, dessen ersten Teil am Sitzteil um einen Bolzen schwenkbar gelagert und dessen zweiter Teil dazu versetzt am ersten Teil um einen weiteren Bolzen schwenkbar gelagert ist. Der Erfindung liegt die Aufgabe zu Grunde, einen Fahrzeugsitz der eingangs genannten Art zu verbessern, insbesondere die Auswirkungen von Defekten zu begrenzen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Die Verwendung einer Koppelvorrichtung mit einer Klinkenanordnung, bei welcher der um eine Achse verschwenkbar angeordnete Hebel zwei relativ zueinander in ihrer Position veränderbare Bereiche hat, vorliegend zwei relativ zueinander um die gleiche Achse, nämlich die Achse des Hebels, verschwenkbare Bereiche, ermöglicht eine einfache Kopplung der Lehnenentriegelung mit der Schienenentriegelung und eine Entkopplung von Neigungseinstellung und Freischwenken der Lehne.

Die Entkopplung mittels des Hebels löst dass Problem, welches in der vordersten Lehnenneigungsposition bei Beschlägen mit motorischer Lehnenneigungseinstellung und einem an der Lehne angeordneten Motor auftritt, wonach beim Freischwenken der Lehne der selbsthemmende Motor geschwenkt, jedoch seine Welle in Getriebeverbindung mit dem im Beschlag vorhandenen Getriebe steht und daher im Falle von festen Endanschlägen festgehalten wird, weshalb beispielsweise Mikroschalter vorgesehen werden, die den Motor vor Erreichen einer für das Freischwenken kritischen Fehlstellung abschalten, so dass noch eine Weiterdrehen des Getriebes im Beschlag um den von der Lehne beim Freischwenken zurückgelegten Winkel möglich ist.

Die Kopplung mittels des zwei relativ zueinander in ihrer Position veränderbare Bereiche aufweisenden Hebels löst das Problem, dass im Falle eines Defekts des Mikroschalters die unerwünschte Fehlstellung der Lehne bzw. des Beschlags auftreten und die Lehnenentriegelung blockiert sein könnte, d.h. die Lehne nicht mehr freischwenkbar ist. Das gleiche Problem kann bei manueller Lehnenneigungseinstellung auftreten, wenn über eine vorderste Winkelstellung hinaus eingestellt wird. Die erfindungsgemäße Lösung stellt sicher, dass die Betätigung der Lehne - ggf. zur Bergung von Insassen im Crashfall - auch bei einer Fehlstellung der Lehne möglich ist.

Die Relativbewegung der beiden Bereiche des Hebels, welcher bevorzugt mehrteilig ausgebildet ist, jedoch auch einstückig ausgebildet sein kann, ist vorzugsweise in einer Richtung durch eine Anlagefläche räumlich begrenzt. Diese Anlagefläche wirkt bevorzugt einer Belastung des gesamten Hebels in Öffnungsrichtung des Hebels entgegen.

Dagegen ist vorzugsweise die Relativbewegung der beiden Bereiche des Hebels in einer Richtung durch eine elastische Kraft begrenzt, welche eine Rückstellkraft bewirkt, so dass der erste Bereich des Hebels in Anlage an den zweiten Bereich des Hebels gedrückt wird.

Eine besonders einfach herzustellende Ausgestaltung ergibt sich, wenn der Hebel zweiteilig ausgebildet ist, wobei die beiden Teile auf einer gemeinsamen Achse verschwenkbar angeordnet sind, und eine Feder vorgesehen ist, welche die beiden Teile im Normalbetrieb in Anlage aneinander drückt. Es ist jedoch auch eine einteilige Ausbildung mit einem Federbereich möglich, der einknicken kann, ansonsten aber mittels der elastischen Kraft die Relativbewegung der beiden Bereiche begrenzt.

Die mögliche Relativbewegung der beiden Bereiche des Hebels ist vorzugsweise in Öffnungsrichtung eines hakenförmigen Bereichs des Hebels gerichtet. Durch die Anlagefläche wird ein Öffnen unterstützt, jedoch kann der hakenförmige Bereich entgegen der rückstellend wirkenden Kraft einer Feder oder eines entsprechenden, elastischen Bereichs im Falle einer Fehlstellung weiter in Öffnungsrichtung gedrückt werden, um eine Überlastung der Klinkenanordnung zu vermeiden. Dies stellt gleichzeitig sicher, dass die Lehnenentriegelung nicht durch eine Blockierung der Klinkenanordnung ebenfalls blockiert wird, so dass eine Notentriegelung der Lehne auch im Falle einer Fehlbedienung möglich ist.

Für die Kopplung der Lehnenentriegelung und der Schienenentriegelung weist der zwischen Sitzteil und Lehne vorzugweise vorgesehene Beschlag vorzugsweise einen drehbar gelagerten Betätigungsring auf, mit welchem der hakenförmige Bereich des an der Lehne angeordneten Hebels zusammenwirken kann, und welcher mittels der Schienenentriegelung am sitzteilfesten Teil des Beschlags gehalten wird.

Im Folgenden ist die Erfindung anhand eines in der Zeichnung dargestellten Ausführungsbeispiels näher erläutert. Es zeigen
- Fig. 1: eine ausschnittsweise perspektivische Ansicht einer Klinkenanordnung, wie sie bei einem erfindungsgemäßen Fahrzeugsitz verwendet wird,
- Fig. 2: eine Fig. 1 enstprechende Darstellung ohne Motor,
- Fig. 3: eine Seitenansicht des Beschlagbereichs in der normalen Benutzungsstellung,
- Fig. 4: eine Fig. 3 entsprechende Ansicht des Beschlagbereichs bei betätigter Lehnenentriegelung,
- Fig. 5: eine Fig. 3 entsprechende Ansicht des Beschlagbereichs in der Mitnahmeposition der Klinkenanordnung und der Easy-Entry-Scheibe,
- Fig. 6: eine Fig. 3. entsprechende Ansicht des Beschlagbereichs in der vordersten freigeschwenkten Stellung der Lehne mit gedrehter Easy-Entry-Scheibe,
- Fig. 7: eine Seitenansicht im Falle einer Fehlstellung der Klinkenanordnung und der Easy-Entry-Scheibe,
- Fig. 8: eine perspektivische Detailansicht der Klinkenanordnung,
- Fig. 9: eine Explosionsdarstellung der Klinkenanordnung, und
- Fig. 10: eine schematische Seitenansicht eines Fahrzeugsitzes.

Gemäß dem vorliegenden Ausführungsbeispiel weist ein Fahrzeugsitz 1, welcher in einer vorderen Sitzreihe verwendet wird, ein Sitzteil 3 und eine Lehne 5 auf, die relativ zum Sitzteil 3 mittels Beschlägen 7 verschwenkbar ist. Die als Getriebebeschläge ausgebildeten Beschläge 7 weisen für eine Neigungseinstellung ein Exzenterumlaufgetriebe auf und sind zusätzlich für ein Freischwenken der Lehne 5 entriegelbar. Das selbsthemmende Exzenterumlaufgetriebe ist beispielsweise für eine manuelle Neigungseinstellung in der DE 44 36 101 A1 und für eine motorische Neigungseinstellung in der DE 199 38 666 A1 beschrieben, deren diesbezügliche Offenbarungsgehalte ausdrücklich einbezogen werden. Die für das Freischwenken verwendeten Bauteile sind in der DE 197 15 764 C2 oder der DE 102 06 299 A1 of fenbart, deren diesbezügliche Offenbarungsgehalte ausdrücklich einbezogen werden.

Beim Exzenterumlaufgetriebe stehen ein vorliegend als Zahnkranz ausgebildetes, scheibenförmiges erstes Beschlagteil 7' und ein vorliegend als Zahnrad ausgebildetes zweites Beschlagteil 7" miteinander in Getriebeverbindung und lagern zwischen sich einen Exzenter. Ein sitzteilfester Adapter ist in der Zeichnung mit dem Bezugszeichen 7a, ein Freischwenk-Beschlagteil mit dem Bezugszeichen 7b bezeichnet. Das lehnenfeste Beschlagteil 7b ist relativ zum ersten Beschlagteil 7' um eine Lehnen-Schwenkachse schwenkbar gelagert und mittels einer schwenkbar gelagerten Sperrklinke (nicht dargestellt) lösbar mit dem ersten Beschlagteil 7', beispielsweise mit einem daran angebrachten oder ausgebildeten Zahnsegment, verriegelt, während der sitzteilfeste Adapter 7a mit dem zugeordneten zweiten Beschlagteil 7" fest verbunden ist.

Auf Grund des Exzenterumlaufgetriebes verändert sich die Position der Lehnen-Schwenkachse in Abhängigkeit der Stellung der Beschläge 7, weshalb im Folgenden auf die zwischen den Beschlägen 7 angeordnete Welle, welche sich indirekt über weitere Getriebeteile an einem sitzteilfesten Bereich des Fahrzeugsitzes 1 abstützt, der Einfachheit halber als Lehnen-Schwenkachse S Bezug genommen wird.

Der Fahrzeugsitz 1 ist mittels zweier unten mit dem Sitzteil 3 über mehrere (nicht dargestellte) Schwingen verbundener, parallel zueinander angeordneter erster Schienen 8 und zugeordneter, fahrzeugstrukturfester, zweiter Schienen (nicht dargestellt), welche mit den ersten Schienen 8 durch wechselseitiges Umgreifen zusammenwirken, auf an sich bekannte Weise in Längsrichtung des Fahrzeugs verschiebbar am Boden angebracht. Der Verstellweg ist für den normalen Gebrauch über einen Anschlag nach vom begrenzt. Die Längseinstellbarkeit des Fahrzeugsitzes 1 ist über eine Längseinsteller-Verstelleinrichtung mit einem Bügel 9 als Bedienelement zum Betätigen der Schienenentriegelung von Hand möglich. Es kann jedoch alternativ oder in Verbindung hiermit eine motorische Längseinstellbarkeit vorgesehen sein.

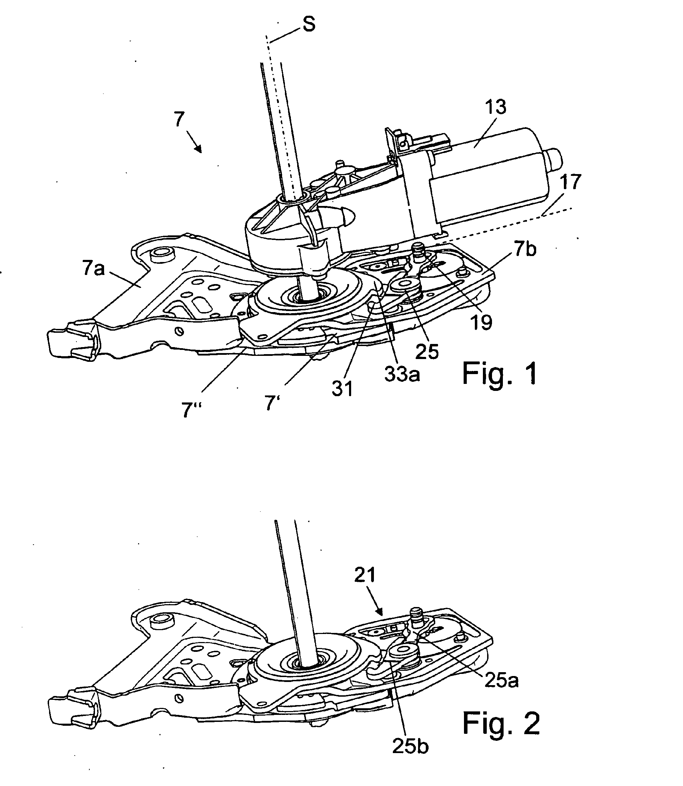

Die Lehnenneigung im Winkelbereich der normalen Benutzungsstellung, in welchem der Fahrzeugsitz 1 dem Sitzgebrauch dient, ist vorliegend über einen Motor 13 (siehe Fig. 1) elektrisch betätigt einstellbar, wobei der Motor 13 lehnenfest angeordnet ist und auf an sich bekannte Weise mit der Welle und den Beschlägen 7 in Getriebeeingriff steht und mit diesen zusammenwirkt, so dass die Lehne 5 gegenüber dem Sitzteil 3 innerhalb des vorgegebenen Winkelbereichs verschwenkbar ist. Als "Endanschläge" zur Begrenzung des normalen Schwenkbereichs der Lehne 5 für die Benutzungsstellungen dienen hierbei Mikroschalter, um das bekannte Problem beim Freischwenken aus der vordersten Benutzungsstellung heraus zu umgehen, dass die freischwenkende Lehne 5 den Motor 13 mitnimmt, während ein mechanischer, fester Endanschlag mittels des Exzenterumlaufgetriebes die mit dem Motor 13 in Getriebeeingriff stehende Welle festhält, was in Verbindung mit einer Selbsthemmung des Motors 13 zu einer Beschädigung desselben führen würde.

Ferner lässt sich die Lehne 5 über eine Freischwenk-Bedieneinrichtung 15, die am oberen seitlichen Ende der Lehne 5 angeordnet ist, freischwenken, d.h. aus ihrer verriegelten, normalen Benutzungsstellung lösen und nach vom schwenken. Die Lehne 5 des Fahrzeugsitzes 1 wird hierbei manuell - in Verbindung mit einem Vorfahren des Fahrzeugsitzes 1 - in die "Easy-Entry-Stellung" gebracht, in welcher die Lehne 5 unter Vorschwenken dichtest möglich am Armaturenbrett oder am Fahrzeugsitz der vorhergehenden Sitzreihe positioniert ist, um einen möglichst großen Ein- bzw. Ausstiegsbereich für den dahinter angeordneten Fahrzeugsitz zur Verfügung stellen zu können, wenn dieser Fahrzeugsitz nicht über eine eigene Fahrzeugtüre zugänglich ist.

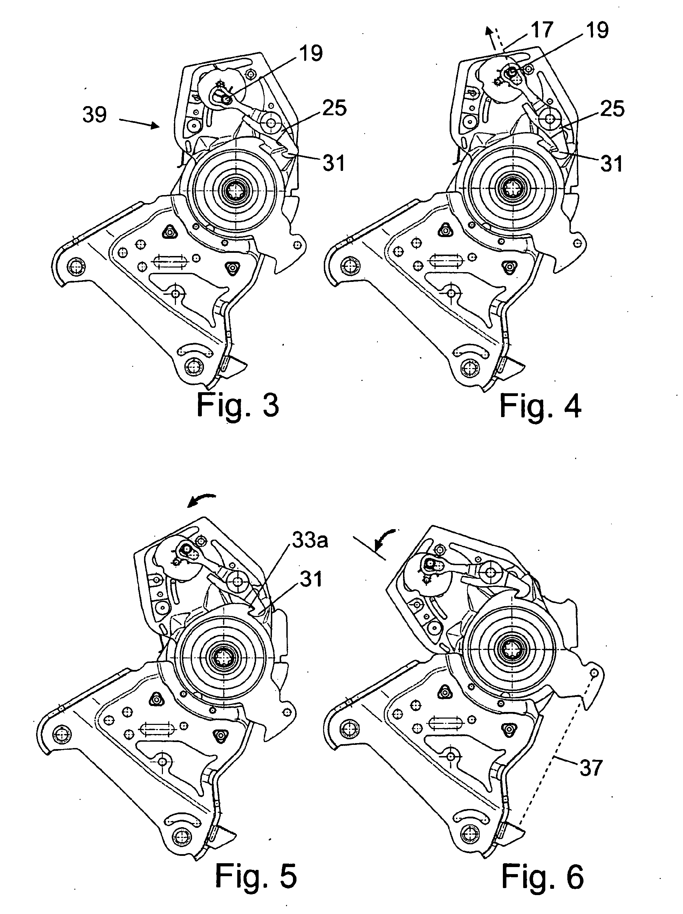

Der Ablauf eines Entriegelungsvorgangs im Normalfall ist in den Figuren 3 bis 6 dargestellt. Fig. 3 zeigt hierbei die normale Benutzungsstellung mit verriegelter Lehne 5. Hierbei ist die Lehne 5 über die selbsthemmende Getriebeanordnung der Beschläge 7 starr mit dem Sitzteil 3 verbunden. Fig. 4 zeigt den Zustand, bei welchem die Freischwenk-Bedieneinrichtung 15 am oberen Ende der Lehne 5 betätigt ist und die Verriegelung zwischen erstem Beschlagteil 7' und lehnenfestem Beschlagteil 7b gelöst wird, d.h. die Sperrklinke am Freischwenk-Beschlagteil 7b entsichert und geöffnet wird, so dass die Lehne 5 nach vom geschwenkt werden kann. Fig. 5 zeigt eine Zwischenstellung beim Freischwenken der Lehne 5 und Fig. 6 zeigt die vorderste Stellung der Lehne 5 beim Freischwenken, wobei für ein Einnehmen der "Easy-Entry-Stellung" des Fahrzeugsitzes 1 die entsprechende "Easy-Entry-Betätigungsvorrichtung" aktiviert ist.

Im Folgenden werden anhand des in den Fig. 3 bis 6 dargestellten Ablaufs die einzelnen für die Funktion relevanten Bauteile kurz beschrieben.

Zum Freischwenken der Lehne 5 wird besagte Freischwenk-Bedieneinrichtung 15 am oberen Ende der Lehne 5 betätigt, wodurch ein in der Lehne 5 verlaufender Bowdenzug 17 betätigt wird, d.h. die Hülle sich relativ zur Seele bewegt. In an sich bekannter Weise (siehe DE 197 15 764 C2) wird durch die Betätigung des Bowdenzugs 17 ein Entriegelungsbolzen 19, welcher exzentrisch auf einem am Freischwenk-Beschlagteil 7b schwenkbar gelagerten, die Sperrklinke sichernden Steuerhebel sitzt, entlang einer Kulisse bewegt, wodurch ein Entriegeln der Getriebebeschläge 7, d.h. des ersten Beschlagteils 7' und des Freischwenk-Beschlagteils 7b, bewirkt wird, so dass die Lehne 5 nach vom geschwenkt werden kann.

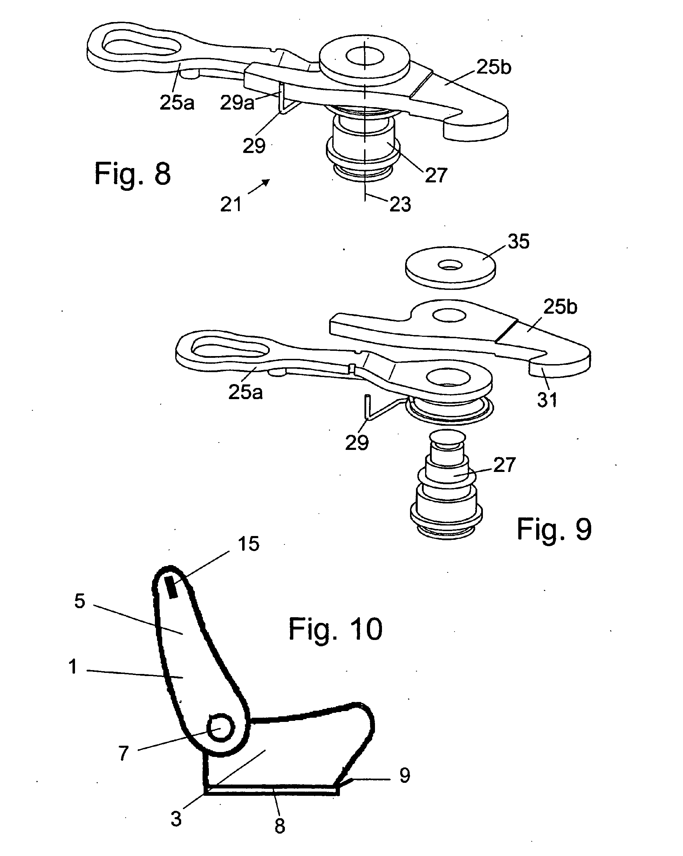

Mit dem Entriegelungsbolzen 19 steht ferner eine ebenfalls am Freischwenk-Beschlagteil 7b schwenkbar gelagerte Klinkenanordnung 21 zur Steuerung der Schienenentriegelung für das Einnehmen der "Easy-Entry-Stellung" in Verbindung. Die Klinkenanordnung 21 weist einen um eine Klinken-Schwenkachse 23 verschwenkbar angeordneten Hebel 25 auf, welcher zweiteilig ausgebildet ist und dessen beide Teile in nachfolgend beschriebener Weise zusammenwirken. Der auf der Seite des Entriegelungsbolzens 19 angeordnete, erste Teil 25a des Hebels 25 weist am äußeren Ende ein Langloch auf, in welches der Entriegelungsbolzen 19 eingreift und die Mitnahme des Hebels 25 sichert. Das andere Ende dieses Teils des Hebels 25 weist eine kreisförmige Öffnung auf, durch welche ein die Klinken-Schwenkachse 23 bildender, am Freischwenk-Beschlagteil 7b angeordneter, mehrstufiger Lagerbolzen 27 ragt. Der Lagerbolzen 27 ist mittels Schneidnieten mit dem Beschlagteil 7b fest verbunden. Der erste Teil 25a des Hebels 25 ist derart ausgebildet, dass das Ende mit der Öffnung in einer anderen Ebene angeordnet ist als der weitere Verlauf des Hebels (siehe Fig. 9). Auf einer benachbarten Stufe des Lagerbolzens 27 sitzt der ebenfalls mit einer kreisförmigen Öffnung, jedoch mit geringerem Durchmesser als der erste Teil 25a, versehene zweite Teil 25b des Hebels 25. Ein erstes Ende steht in gleicher Richtung wie der erste Teil 25a des Hebels 25 über und ist - auf Grund der versetzten Ausgestaltung des ersten Teils 25a - mit einer Seitenfläche des ersten Teils 25a in Anlage, wobei eine Feder 29 die beiden Teile 25a, 25b, wenn keine oder nur eine geringe äußere Kraft auf den Hebel 25 einwirkt, in Anlage aneinander hält. Die Feder 29 liegt mit ihrem ersten, um 90° umgebogenen Ende 29a von außen her in Anlage an den zweiten Teil 25b des Hebels (siehe Fig. 8) an dem sich in Richtung des ersten Teils des Hebels erstreckenden Ende, jedoch auf der vom ersten Teil abgewandten Seite, an. Sie ist mit ihrem zentralen Bereich um den Lagerbolzen 27 in einer Stufe benachbart des ersten Teils 25a des Hebels gewickelt. Das andere, ebenfalls um 90° umgebogenen Ende liegt von der anderen Seite her an den ersten Teil 25a des Hebels an, so dass die beiden Teile 25a, 25b federnd in Anlage aneinander gedrückt werden. Das zweite Ende des zweiten Teils 25b steht - ausgehend vom Lagerbolzen 27 - in entgegengesetzter Richtung um etwa die gleiche Länge wie das erste Ende über und ist mit einem hakenförmigen Endbereich 31 ausgebildet, welcher als Klinke in Verbindung mit einer von einem Betätigungsring 33 vorstehenden Hakennase 33a dient. Der Betätigungsring 33 ist drehbar am ersten Beschlagteil des Beschlags 7 gelagert und und damit auch drehbar zum sitzteilfesten Adapter 7a. Die Feder 29 und beide Teile 25a, 25b des Hebels 25 werden mittels einer aufgepressten Lochscheibe 35 auf dem Lagerbolzen 27 gehalten.

Der in Folge der Betätigung der Freischwenk-Bedieneinrichtung 15 sich bewegende Entriegelungsbolzen 19, welcher durch das Langloch im ersten Teil 25a des Hebels 25 ragt, nimmt den ersten Teil 25a des Hebels 25 mit. Durch die elastische Kraft, d.h. die vorspannende Kraft der Feder 29, nimmt der erste Teil 25a des Hebels 25 den zweiten Teil 25b des Hebels 25 bei seiner Bewegung mit. Während der Bewegung des Entriegelungsbolzens 19 dreht sich der hakenförmige Endbereich 31 des Hebels 25 so weit, dass er am Betätigungsring 33 an dessen Außenumfang aufsitzt (siehe Fig. 4).

Durch das nun erfolgende Vorschwenken der Lehne 5 wird der Hebel 25 mitgenommen und gleitet am Außenumfang des Betätigungsrings 33 entlang, bis er in Anlage an die Hakennase 33a gelangt (siehe Fig. 5). Der bezüglich des ersten Beschlagteils 7' drehbar ausgebildete Betätigungsring 33 wird nunmehr mit der Schwenkbewegung der Lehne 5 über den Hebel 25 mitgenommen, d.h. der Betätigungsring 33 dreht sich um die Lehnen-Schwenkachse S.

Kurz vor Erreichen ihrer vordersten Schwenkposition der Lehne 5, die in Fig. 6 dargestellt ist, wird auf an sich bekannte Weise über den mitgenommenen Betätigungsring 33 ein weiterer Bowdenzug 37, im Folgenden auf Grund seiner Funktion auch als Schienenentriegelungs-Bowdenzug 37 bezeichnet, betätigt, wofür die Seele des Bowdenzugs 37 an einem vorstehenden Bereich des Betätigungsrings 33 angebracht ist. Durch die Betätigung des Bowdenzugs 37 werden die Schienen entriegelt, so dass der Fahrzeugsitz 1 in seine vorderste Position verfahren werden kann. Somit ist ausgehend vom Entriegelungsbolzen 19 über den am mehrstufigen Lagerbolzen 27 gelagerten Hebel 25 mit seinem hakenförmigen Bereich 31 und seiner Feder 29, den Betätigungsring 33 mit seiner Hakennase 33a und den Bowdenzug 37 zur Schienenentriegelung eine Koppelvorrichtung 39 vorgesehen, welche - vorliegend verzögert - die Schienenentriegelung mit der vorhergehenden Entriegelung der Beschläge 7 für ein Freischwenken der Lehne 5 koppelt. Hierbei ist eine gemeinsame Betätigung über die Freischwenk-Bedieneinrichtung 15 vorgesehen, der Kraftfluss verzweigt sich jedoch am Entriegelungsbolzen 19, um auf vorteilhafte Weise die Bewegung der Lehne 5 für die Betätigung der Schienenentriegelung ausnutzen zu können und gleichzeitig sicherzustellen, dass vor einem Verfahren des Fahrzeugsitzes 1 die Lehne 5 weitgehend vorgeschwenkt ist.

Durch die oben beschriebene Ausgestaltung ist auch eine Entkopplung der Freischwenkfunktion der Lehne 5 samt Entriegelung der Schienen für ein Einnehmen der "Easy-Entry-Stellung" und des Einstellens der Lehnenneigung (mittels des Exzenterumlaufgetriebes) möglich. Die Entkopplung ergibt sich dadurch, dass der Hebel 25 während der Einstellung der Lehnenneigung nicht auf dem Betätigungsring 33 aufsitzt. Der am ersten Beschlagteil 7' drehbar gelagerte Betätigungsring 33 wird zwar durch den Schienenentriegelungs-Bowdenzug 37 am sitzteilfesten Adapter 7a festgehalten, jedoch können sich das erste Beschlagteil 7' und das damit verriegelte Freischwenk-Beschlagteil 7b aufgrund des nicht-aufsitzenden Hebels 25 ungehindert relativ zum Betätigungsring 33 bewegen.

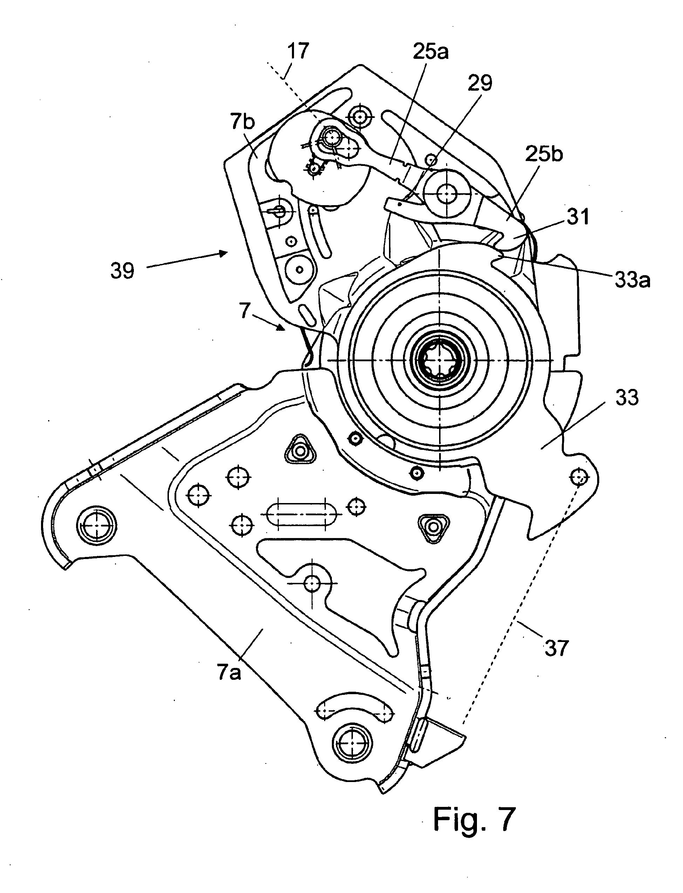

Bei dieser Anordnung tritt jedoch im sehr seltenen aber aus Sicherheitsgründen wesentlichen Fall eines Versagens des Mikroschalters zur Begrenzung des Lehnenneigungseinstellbereichs nach vom das in Fig. 7 dargestellte Problem auf, nämlich, dass bei Betätigung der Freischwenk-Bedieneinrichtung 15, durch welche der Entriegelungsbolzen 19 bewegt wird, der hakenförmige Endbereich 31 an der falschen Stelle in Anlage an der Betätigungsring 33 gelangt, nämlich im Rückenbereich der Hakennase 33a, so dass bei einem einstückig, starr ausgebildeten Hebel 25 ein Weiterbewegen des Entriegelungsbolzens 19 und damit ein vollständiges Entriegeln und Freischwenken der Lehne 5 blockiert wäre. Das gleiche Problem kann bei manueller Lehnenneigungseinstellung auftreten, wenn über eine vorderste Winkelstellung hinaus eingestellt wird. Durch die vorliegend zweiteilige Ausgestaltung des Hebels 25 in Verbindung mit der Feder 29 kann der Hebel 25 ausknicken, so dass trotz der Anlage des hakenförmigen Endbereichs 31 an den Rückenbereich der Hakennase 33a eine vollständige Bewegung des Entriegelungsbolzens 19 erfolgen kann. Damit kann das Entriegeln von lehnenfestem Beschlagteil 7b und erstem Beschlagteil 7' und somit ein Freischwenken der Lehne 5 sichergestellt werden, beispielsweise um im Crashfall einen Insassen vom dahinter angeordneten Fahrzeugsitz zu bergen. Jedoch ist - mangels Eingreifens des hakenförmigen Endbereichs 31 in die Hakennase 33a - ein gleichzeitiges automatisches Entriegeln der Schienenentriegelung in diesem Fehlbedienungsfall vorliegend nicht möglich, aber der Fahrzeugsitz 1 kann über den Bügel 9 wie im Falle einer Veränderung der Längseinstellung des Fahrzeugsitzes verstellt werden. Durch das Vorsehen der Feder 29 und ihrer als Rückstellkraft wirkenden elastischen Kraft wird der zweiteilige Hebel 25 bei einem Zurückschwenken der Lehne 5 wieder in die normale Ausrichtung gebracht, so dass der in Richtung des Entriegelungsbolzens 19 überstehende Teil des ersten Teils 25a des Hebels wieder am zweiten Teil 25b anliegt, wie in den Fig. 3 bis 6 dargestellt.

Der Hebel 25 kann gemäß einer nicht in der Zeichnung dargestellten Variante auch einstückig ausgebildet sein, wobei die beiden in diesem Fall miteinander verbunden ausgebildeten Teile 25a, 25b des Hebels derart ausgestaltet sind, dass ein Abknicken in einer Richtung möglich ist, während bei einer Belastung in entgegengesetzter Richtung der Hebel starr ausgebildet ist. Dies kann beispielsweise durch einen die Feder 29 ersetzenden Federbereich (elastischen Bereich) realisiert werden, welcher - unter Aufbau einer elastischen Kraft als Rückstellkraft - in einer Richtung gebogen werden kann, und welchem auf der gegenüberliegenden Seite benachbart ein Anschlagsbereich angeordnet ist, an welchen der Federbereich bei einer entsprechenden Belastung anliegen kann, so dass sich insgesamt die gleiche Funktion wie beim zuvor beschriebenen Ausführungsbeispiel ergibt.

Obwohl die vorliegende Erfindung vorstehend anhand einer elektischen Lehnenneigungseinstellung beschrieben ist, kann eine entsprechende Anordnung samt Hebel 25 auch für eine mechanische Lehnenneigungseinstellung verwendet werden.

**Bezugszeichenliste**

| | |
|---|---|
| 1 | Fahrzeugsitz |
| 3 | Sitzteil |
| 5 | Lehne |
| 7 | Beschlag |
| 7' | erstes Beschlagteil |
| 7" | zweites Beschlagteil |
| 7a | sitzteilfester Adapter |
| 7b | Freischwenk-Beschlagteil |
| 8 | erste Schiene |
| 9 | Bügel |
| 13 | Motor |
| 15 | Freischwenk-Bedieneinrichtung |
| 17 | Bowdenzug |
| 19 | Entriegelungsbolzen |
| 21 | Klinkenanordnung |
| 23 | Klinken-Schwenkachse |
| 25 | Hebel |
| 25a | erster Teil (Hebel) |
| 25b | zweiter Teil (Hebel) |
| 27 | Lagerbolzen |
| 29 | Feder |
| 29a | erstes Ende |
| 31 | hakenförmiger Endbereich |
| 33 | Betätigungsring |
| 33a | Hakennase |
| 35 | Lochscheibe |
| 37 | Bowdenzug (Schienenentriegelung) |
| 39 | Koppelvorrichtung |
| S | Schwenkachse (Lehne) |

## Patentansprüche

1. Fahrzeugsitz mit einer neigungseinstellbaren und freischwenkbaren Lehne (5), insbesondere mit elektromotorischer Lehnenneigungseinstellung, der eine "Easy-Entry-Stellung" einnehmen kann, bei welcher der längseinstellbare Fahrzeugsitz (1) in einer vorderen Position angeordnet und die freigeschwenkte Lehne (5) nach vorn geschwenkt ist, einer Lehnenentriegelung für ein Entriegeln der Lehne (5) zum Freischwenken, einer Schienenentriegelung für ein Einstellen der Längsposition des Fahrzeugsitzes (1) und einer Koppelvorrichtung (39) zum Koppeln der Betätigung der Lehnenentriegelung und der Schienenentriegelung für ein Einnehmen der "Easy-Entry-Stellung", wobei Teil der Koppelvorrichtung (39) eine Klinkenanordnung (21) ist, welche einen um eine Achse verschwenkbar angeordneten Hebel (25) aufweist, der zwei relativ zueinander in ihrer Position veränderbare Bereiche hat, **dadurch gekennzeichnet, dass** die beiden Bereiche relativ zueinander um die gleiche Achse verschwenkbar sind wie der Hebel (25).

2. Fahrzeugsitz nach Anspruch 1, **dadurch gekennzeichnet, dass** die Relativbewegung der beiden Bereiche des Hebels (25) in einer Richtung durch eine Anlagefläche räumlich begrenzt ist.

3. Fahrzeugsitz nach einem der vorhergehenden Ansprüche, **dadurch gekennzeichnet, dass** die Relativbewegung der beiden Bereiche des Hebels (25) in einer Richtung durch eine elastische Kraft begrenzt ist, welche als Rückstellkraft wirkt.

4. Fahrzeugsitz nach Anspruch 2 und 3, **dadurch gekennzeichnet, dass** die elastische Kraft auf die beiden Bereiche des Hebels (25) derart wirkt, dass der erste Bereich des Hebels in Anlage an den zweiten Bereich des Hebels gedrückt wird.

5. Fahrzeugsitz nach Anspruch 3 oder 4, **dadurch gekennzeichnet, dass** die elastische Kraft durch eine Feder (29) oder durch einen elastischen Bereich des Hebels (25) aufbaut wird.

6. Fahrzeugsitz nach einem der vorhergehenden Ansprüche, **dadurch gekennzeichnet, dass** der Hebel (25) zweiteilig ausgebildet ist, wobei die beiden Teile (25a, 25b) auf einer gemeinsamen Achse verschwenkbar angeordnet sind, und dass eine Feder (29) vorgesehen ist, welche die beiden Teile (25a, 25b) im Normalbetrieb in Anlage aneinander drückt.

7. Fahrzeugsitz nach einem der vorhergehenden Ansprüche, **dadurch gekennzeichnet, dass** der Hebel (25) an einem Ende einen hakenförmigen Bereich (31) aufweist, welcher mit einer Hakennase (33a) eines drehbar gelagerten Betätigungsrings (33) zusammenwirken kann.

8. Fahrzeugsitz nach Anspruch 7, **dadurch gekennzeichnet, dass** die mögliche Relativbewegung der beiden Bereiche des Hebels (25) in Öffnungsrichtung des hakenförmigen Bereichs (31) gerichtet ist.

9. Fahrzeugsitz nach einem der vorhergehenden Ansprüche, **dadurch gekennzeichnet, dass** der Hebel (25) an einem ersten Ende eine Öffnung, insbesondere ein Langloch, aufweist, in welche ein Entriegelungsbolzen (19) ragt, der über eine Freischwenk-Bedieneinrichtung (15) bewegbar ist.

10. Fahrzeugsitz nach einem der vorhergehenden Ansprüche, **dadurch gekennzeichnet, dass** der Hebel (25) an einem zweiten Ende einen hakenförmigen Endbereich (31) aufweist, welcher mit einem Betätigungsring (33) zusammenwirken kann, um durch ein Eingreifen des hakenförmigen Endbereichs (31) in eine Hakennase (33a) des Betätigungsrings (33) und das weitere Verschwenken der Lehne (5) des Fahrzeugsitzes (1) eine Drehung des Betätigungsrings (33) zu bewirken und damit die Schienenentriegelung zu lösen, so dass der Fahrzeugsitz (1) nach vom in die "Easy-Entry-Stellung" verschiebbar ist.

11. Fahrzeugsitz nach einem der vorhergehenden Ansprüche, **dadurch gekennzeichnet, dass** die Lehne (5) mittels wenigstens eines Beschlags (7) relativ zu einem Sitzteil (3) des Fahrzeugsitzes (1) neigungseinstellbar und freischwenkbar ist, wobei der Hebel (25) und ein mit dem Hebel (25) zusammenwirkenden Teil der Koppelvorrichtung (39) an zwei verschiedenen Beschlagteilen (7', 7b) des Beschlags (7) angeordnet sind.

12. Fahrzeugsitz nach einem der vorhergehenden Ansprüche, **dadurch gekennzeichnet, dass** der mit dem Hebel (25) zusammenwirkende Teil der Koppelvorrichtung ein drehbar gelagerter Betätigungsring (33) ist, der an die Schienenentriegelung gekoppelt ist und mittels dieser am sitzteilfesten Teil (7a, 7") des Beschlags (7) gehalten wird.

13. Fahrzeugsitz nach einem der vorhergehenden Ansprüche, **dadurch gekennzeichnet, dass** der Beschlag (7) ein Getriebebeschlag mit selbsthemmendem Exzenterumlaufgetriebe ist.

## Claims

1. Vehicle seat having an inclination-adjustable and a freely swivellable rest (5), particularly with an electromotive rest tilt adjustment, which may adopt an "easy-entry position" in which the longitudinally adjustable vehicle seat (1) is arranged in a front position and the rest (5) swivelled free is swivelled forward, a rest release for releasing the rest (5) for free swivelling, a rail release for adjusting the longitudinal position of the vehicle seat (1) and a coupling device (39) for coupling the actuating operation of the rest release and of the rail release for adopting the "easy-entry position", wherein part of the coupling device (39) is a pawl arrangement (21) having a lever (25) that is swivellable around an axis, the lever (25) having two areas changeable in their positions relative to one another, **characterized in that** the two areas are swivellable relative to one another around the same axis as the lever (25).

2. Vehicle seat as claimed in claim 1, **characterized in that** the relative motion of the two areas of the lever (25) in one direction is restricted in space by a contact surface.

3. Vehicle seat as claimed in any preceding claim, **characterized in that** the relative motion of the two areas of the lever (25) in one direction is restricted by an elastic force which acts as a restoring force.

4. Vehicle seat as claimed in claims 2 and 3, **characterized in that** the elastic force acts on the two areas of the lever (25) such that the first area of the lever is pressed and applied against the second area of the lever.

5. Vehicle seat as claimed in claim 3 or 4, **characterized in that** the elastic force is generated by a spring (29) or by an elastic area of the lever (25).

6. Vehicle seat as claimed in any preceding claim, **characterized in that** the lever (25) is designed as a two-part element, while the two parts (25a, 25b) are swivellably arranged on a common axis, and **in that** a spring (29) is provided which presses the two parts (25a, 25b) against one another during normal operation.

7. Vehicle seat as claimed in any preceding claim, **characterized in that** the lever (25) has a hook-shaped area (31) at one end which may cooperate with a hook nose (33a) of a rotatable actuating ring (33).

8. Vehicle seat as claimed in claim 7, **characterized in that** the possible relative motion of the two areas of the lever (25) is directed in the opening direction of the hook-shaped area (31).

9. Vehicle seat as claimed in any preceding claim, **characterized in that** the lever (25) has, at its first end, an opening, particularly an elongated hole, into which a release bolt (19) projects which is movable via a free swivelling operator control (15).

10. Vehicle seat as claimed in any preceding claim, **characterized in that** the lever (25) has a hook-shaped end area (31) which is situated at a second end and which may cooperate with an actuating ring (33) in order to bring about, by the hook-shaped end area (31) engaging in a hook nose (33a) of the actuating ring (33) and by the further swivelling of the rest (5) of the vehicle seat (1), a rotation of the actuating ring (33) thereby releasing the rail release such that the vehicle seat (1) is slidable forward into the "easy-entry position".

11. Vehicle seat as claimed in any preceding claim, **characterized in that** the rest (5) is inclination-adjustable and freely swivellable relative to one seat part (3) of the vehicle seat (1) by means of at least one fitting (7), wherein the lever (25) and one part the of coupling device (39) cooperating with the lever (25) are arranged at two different fitting parts (7', 7b) of the fitting (7).

12. Vehicle seat as claimed in any preceding claim, **characterized in that** the part of the coupling device cooperating with the lever (25) is a rotatable actuating ring (33) which is coupled to the rail release and is held at the part fastened to the seat part (7a, 7") of the fitting (7) by means of the rail release.

13. Vehicle seat as claimed in any preceding claim, **characterized in that** the fitting (7) is a gear fitting having a self-locking eccentric planetary gear.

## Revendications

1. Siège de véhicule avec un dossier (5) à inclinaison réglable et librement pivotant, en particulier avec un réglage d'inclinaison de dossier par moteur électrique, pouvant être mise en position « Easy Entry », où le siège de véhicule (1) réglable longitudinalement est mis dans une position avancée et où le dossier (5) librement pivoté est repoussé vers l'avant, avec un dispositif de déverrouillage de dossier pour le déblocage du dossier (5) pour le pivotement libre de celui-ci, un dispositif de déverrouillage de glissière permettant de régler la position longitudinale du siège de véhicule (1), et un mécanisme d'accouplement (39) pour coupler l'actionnement du dispositif de déverrouillage de dossier à celui du dispositif de déverrouillage de glissière pour permettre la mise en position « Easy Entry », un dispositif à cliquet (21) faisant partie du mécanisme d'accouplement (39) et comportant un levier (25) pivotant autour d'un axe qui présente deux parties dont la position peut être modifiée l'une par rapport à l'autre, **caractérisé en ce que** les deux parties sont pivotantes l'une par rapport à l'autre autour du même axe que le levier (25).

2. Siège de véhicule selon la revendication 1, **caractérisé en ce que** le déplacement relatif des deux parties du levier (25) dans une direction est spatialement limité par une surface de butée.

3. Siège de véhicule selon l'une des revendications précédentes, **caractérisé en ce que** le déplacement relatif des deux parties du levier (25) dans une direction est limité par une force élastique agissant comme force de rappel.

4. Siège de véhicule selon les revendications 2 et 3, **caractérisé en ce que** la force élastique agit sur les deux parties du levier (25) de telle manière que la première partie du levier est serrée en butée contre la deuxième partie du levier.

5. Siège de véhicule selon la revendication 3 ou la revendication 4, **caractérisé en ce que** la force élastique est générée par un ressort (29) ou par une zone élastique du levier (25).

6. Siège de véhicule selon l'une des revendications précédentes, **caractérisé en ce que** le levier (25) est réalisé en deux pièces, les deux pièces (25a, 25b) étant montées de manière à pivoter sur un axe commun, et **en ce qu'**un ressort (29) est prévu, lequel serre les deux pièces (25a, 25b) l'une contre l'autre en fonctionnement normal de l'installation.

7. Siège de véhicule selon l'une des revendications précédentes, **caractérisé en ce que** le levier (25) présente une zone en forme de crochet (31) à une extrémité, laquelle peut coopérer avec un bec de crochet (33a) d'une bague d'actionnement (33) montée de manière rotative.

8. Siège de véhicule selon la revendication 7, **caractérisé en ce que** le déplacement relatif possible des deux parties du levier (25) est orienté dans la direction d'ouverture de la zone en forme de crochet (31).

9. Siège de véhicule selon l'une des revendications précédentes, **caractérisé en ce que** le levier (25) présente une ouverture à une première extrémité, en particulier un trou oblong où s'engage un axe de déverrouillage (19), lequel est mobile au moyen d'un dispositif de commande de pivotement libre (15).

10. Siège de véhicule selon l'une des revendications précédentes, **caractérisé en ce que** le levier (25) présente une zone d'extrémité en forme de crochet (31) à une deuxième extrémité, laquelle peut coopérer avec une bague d'actionnement (33) pour provoquer une rotation de la bague d'actionnement (33) par engrènement de la zone d'extrémité en forme de crochet (31) dans un bec de crochet (33a) de la bague d'actionnement (33) et poursuite du pivotement du dossier (5) du siège de véhicule (1), et, par suite de rotation de la bague d'actionnement (33), desserrer le dispositif de déverrouillage de glissière, de manière à permettre l'avancée du siège de véhicule (1) vers la position « Easy Entry ».

11. Siège de véhicule selon l'une des revendications précédentes, **caractérisé en ce que** l'inclinaison du dossier (5) est réglable par rapport à une assise (3) du siège de véhicule (1) et celui-ci est rendu librement pivotant au moyen d'une ferrure (7), le levier (25) et une partie du mécanisme d'accouplement (39) coopérant avec le levier (25) étant disposés sur deux parties (7', 7b) différentes de la ferrure (7).

12. Siège de véhicule selon l'une des revendications précédentes, **caractérisé en ce que** la partie du mécanisme d'accouplement (39) coopérant avec le levier (25) est une bague d'actionnement (33) montée de manière rotative, laquelle est accouplée au dispositif de déverrouillage de glissière et est maintenue par celui-ci contre la partie fixe sur l'assise (7a, 7") de la ferrure (7).

13. Siège de véhicule selon l'une des revendications précédentes, **caractérisé en ce que** la ferrure (7) est une ferrure d'engrenage avec un engrenage planétaire à excentrique autobloquant.
